# EUROPÄISCHE PATENTSCHRIFT

(11) **EP 3 966 466 B1**
(45) Veröffentlichungstag und Bekanntmachung des Hinweises auf die Patenterteilung: **05.04.2023**
(21) Anmeldenummer: 20722450.2
(22) Anmeldetag: 15.04.2020
(51) Int. Cl.: F16D 21/00

(54) **MONTAGEOPTIMIERTES ANTRIEBSMODUL FÜR EINEN ANTRIEBSSTRANG EINES KRAFTFAHRZEUGS UND VERFAHREN ZUM MONTIEREN DES ANTRIEBSMODULS**
ASSEMBLY-OPTIMIZED DRIVE MODULE FOR THE POWERTRAIN OF A MOTOR VEHICLE, AND METHOD FOR ASSEMBLING THE DRIVE MODULE
MODULE D'ENTRAÎNEMENT À MONTAGE OPTIMISÉ POUR UNE CHAÎNE CINÉMATIQUE D'UN VÉHICULE AUTOMOBILE AINSI QUE PROCÉDÉ POUR LE MONTAGE DU MODULE D'ENTRAÎNEMENT

(30) Priorität: 07.05.2019 DE 102019111878
(43) Veröffentlichungstag der Anmeldung: 16.03.2022
(73) Patentinhaber: Schaeffler Technologies AG & Co. KG, 91074 Herzogenaurach (DE)
(72) Erfinder: REIMNITZ, Dirk, 77815 Bühl (DE); CHEE, Shia Jiat, 77815 Bühl (DE); WIEGE, Viktor, 77815 Bühl (DE)
(86) Internationale Anmeldenummer: PCT/DE2020/100298
(87) Internationale Veröffentlichungsnummer: WO 2020/224699

(56) Entgegenhaltungen:
- WO-A1-2010/006580
- WO-A1-2017/186227
- CN-U- 203 202 062

## Beschreibung

### Bezeichnung der Erfindung

Montageoptimiertes Antriebsmodul für einen Antriebsstrang eines Kraftfahrzeugs und Verfahren zum Montieren des Antriebsmoduls

### Gebiet der Technik

Die vorliegende Erfindung betrifft ein montageoptimiertes Antriebsmodul für einen Antriebsstrang eines Kraftfahrzeugs und ein Verfahren zum Montieren des Antriebsmoduls.

### Stand der Technik

WO 2017/186227 offenbart ein Antriebsmodul im Stand der Technik.

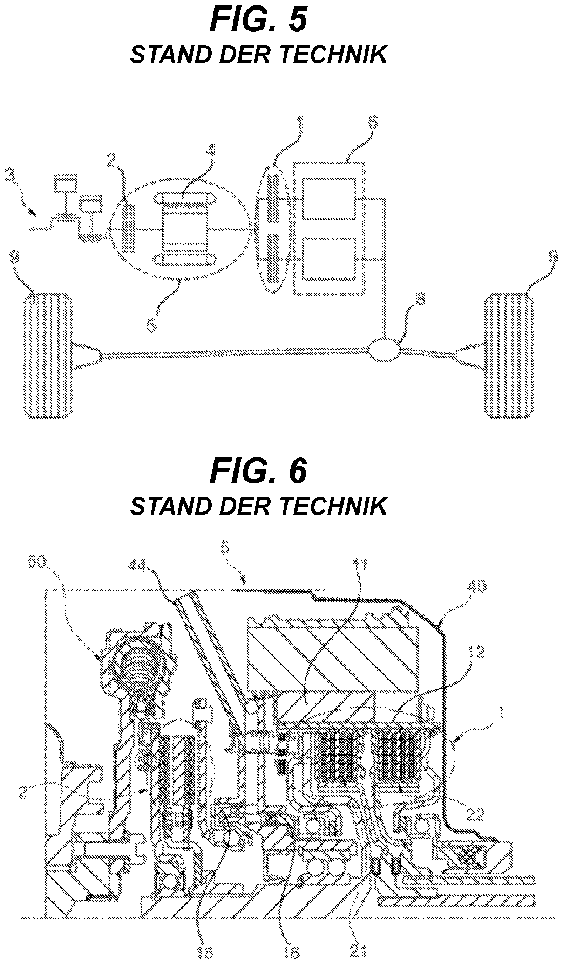

Figur 5 zeigt eine Anordnung eines Antriebsstrangs eines Kraftfahrzeugs im Stand der Technik. Einem Verbrennungsmotor 3 ist ein Hybridmodul 5 nachgeordnet. Das Hybridmodul 5 umfasst dabei auf der Seite des Verbrennungsmotors 3 eine Trennkupplung 2. An einer einem Getriebe 6 zugeordneten Seite des Hybridmoduls 5 ist eine Doppelkupplung 1 vorgesehen. Die Doppelkupplung 1 kann beispielsweise als Nasskupplung oder Trockenkupplung ausgebildet sein. Der Ausgang des Getriebes 6 ist mit einem Differential 8 verbunden, das das von dem Verbrennungsmotor 3 und/oder einer elektrischen Maschine 4 erzeugte Drehmoment auf angetriebene Räder 9 eines Kraftfahrzeugs überträgt.

Figur 6 zeigt ein Hybridmodul 5 im Stand der Technik. Eine Doppelkupplung 1, welche eine erste Teilkupplung 21 und eine zweite Teilkupplung 22 aufweist, ist in einen Rotorträger 12 eines Rotors 11 integriert. Einem Zweimassenschwungrad 50 ist eine Trennkupplung 2 nachgeordnet. Das Hybridmodul 5 ist von einem Gehäuse 40 umgeben. Die erste Teilkupplung 21 und die zweite Teilkupplung 22 sind als Nasskupplungen ausgebildet. Die Trennkupplung 2 ist eine Trockenkupplung. Von außerhalb des Gehäuses 40 wird über eine Druckmittelführung 44 das zum Betätigen eines konzentrischen Nehmerzylinders 16 der ersten Teilkupplung 21 und eines konzentrischen Nehmerzylinders 18 der Trennkupplung 2 erforderliche Druckmittel zugeführt. Dadurch wird bei der Trennkupplung 2 ein Reduzieren von Schleppverlusten erreicht und durch das Anordnen der ersten Teilkupplung 21 und der zweiten Teilkupplung 22 in dem Rotorträger 12 weiterhin ein guter Bauraumkompromiss erreicht. Jedoch führt dies zu einem komplizierten und wenig robusten Aufbau des Hybridmoduls 5.

Aus der DE 10 2009 059 944 A1 ist ein Hybridmodul für einen Antriebsstrang eines Fahrzeugs bekannt. Das Hybridmodul sitzt dabei in einem Antriebsstrang eines Fahrzeugs. Der Antriebsstrang des Fahrzeugs besteht aus einem Verbrennungsmotor, dem Hybridmodul und dem Getriebe. Das Hybridmodul weist eine Trennkupplung und eine einen Stator und einen Rotor aufweisende elektrischen Maschine auf. Eine Doppelnasskupplung ist dem Hybridmodul nachgeschaltet. Die Doppelnasskupplung besteht aus einer radial äußeren Teilkupplung und einer radial inneren Teilkupplung. Die Trennkupplung und die Doppelnasskupplung sind in einem gemeinsamen geschlossenen Nassraum angeordnet.

Nachteil von Nasskupplungen bei der Verwendung in einem Hybridmodul sind deren erhöhte Kosten und deren nicht ausreichende Effizienz.

### Zusammenfassung der Erfindung

### Technische Aufgabe

Es ist demgemäß die Aufgabe der vorliegenden Erfindung, ein kompaktes, kostengünstiges und leicht zu montierendes Antriebsmodul und ein Verfahren zum Montieren des Antriebsmoduls zu schaffen.

### Technische Lösung

Die Aufgabe wir mit den in den unabhängigen Ansprüchen angegebenen Maßnahmen gelöst.

Weitere vorteilhafte Ausgestaltungen sind Gegenstand der abhängigen Ansprüche.

Gemäß einem Aspekt weist ein Antriebsmodul für einen Antriebsstrang eines Kraftfahrzeugs eine elektrische Maschine, die einen Rotorträger mit einem um eine Achse drehbeweglichen Rotor aufweist, eine Trennkupplung, die in dem Rotor der elektrischen Maschine an dem Rotorträger gehaltert ist, und eine der elektrischen Maschine nachgeordnete und einem Getriebe vorgeordnete Doppelkupplung auf, die eine erste Teilkupplung und eine zweite Teilkupplung aufweist. Mindestens eine der ersten Teilkupplung und der zweiten Teilkupplung weist eine Durchgriffsöffnung auf, durch die derart auf ein Befestigungselement einwirkbar ist, dass die Doppelkupplung oder mindestens Teile der Doppelkupplung mit der elektrischen Maschine verbindbar oder von dieser trennbar sind.

Gemäß einer Ausgestaltung weisen die erste Teilkupplung und die zweite Teilkupplung eine gemeinsame Zentralplatte auf.

Gemäß einer weiteren Ausgestaltung bildet die gemeinsame Zentralplatte eine Gegenplatte der ersten Teilkupplung und eine Gegenplatte der zweiten Teilkupplung aus.

Gemäß einer weiteren Ausgestaltung ist die Durchgriffsöffnung radial innerhalb von Reibbelägen mindestens einer der ersten Teilkupplung und der zweiten Teilkupplung angeordnet.

Gemäß einer weiteren Ausgestaltung ist die Doppelkupplung mit einer Trägerplatte verbunden und ist die Trägerplatte mittels des Befestigungselements an dem Rotorträger befestigt.

Gemäß einer weiteren Ausgestaltung ist eine Gegenplatte der Trennkupplung mittels des Befestigungselements an dem Rotorträger befestigt.

Gemäß einer weiteren Ausgestaltung ist die Doppelkupplung mit einer ersten Trägerplatte verbunden, ist der Rotorträger mit einer zweiten Trägerplatte verbunden und ist die Doppelkupplung über die erste Trägerplatte und die zweite Trägerplatte mittels des Befestigungselements an dem Rotorträger befestigt.

Gemäß einer weiteren Ausgestaltung ist die erste Trägerplatte mittels des Befestigungselements an einer Gegenplatte der Trennkupplung befestigt ist und ist die zweite Trägerplatte an der Gegenplatte der Trennkupplung und dem Rotorträger befestigt.

Gemäß einer weiteren Ausgestaltung ist die erste Trägerplatte mittels des Befestigungselements an einer Gegenplatte der Trennkupplung befestigt, ist die zweite Trägerplatte an der Gegenplatte der Trennkupplung befestigt ist und ist die Gegenplatte der Trennkupplung an dem Rotorträger befestigt.

Gemäß einer weiteren Ausgestaltung sind die Trennkupplung, die erste Teilkupplung und die zweite Teilkupplung als trockene Kupplungen ausgebildet.

Gemäß einem weiteren Aspekt wird ein Verfahren zum Montieren des zuvor beschriebenen Antriebsmoduls oder seiner Ausgestaltungen geschaffen.

Anders ausgedrückt wird, damit ein Kupplungssystem, das mindestens teilweise axial neben einer elektrischen Maschine angeordnet ist und mindestens teilweise radial größer als der Rotor der elektrischen Maschine ist, auf einfache Weise an der elektrischen Maschine befestigbar ist, ein Kupplungsaufbau vorgeschlagen, bei dem radial innerhalb von Reibflächen mindestens einer Kupplung mindestens eine Durchgriffsöffnung für eine Montage vorgesehen ist. Durch die mindestens eine Durchgriffsöffnung kann während der Montage auf Befestigungselemente eingewirkt werden, die Teile des Kupplungssystems mit der elektrischen Maschine verbinden oder Teile des Kupplungssystems mit anderen Teilen des Kupplungssystems verbinden, die bereits zuvor mit der elektrischen Maschine verbunden worden sind.

### Kurze Beschreibung der Zeichnungen

Die vorliegende Erfindung wird nachstehend anhand der Beschreibung von Ausführungsformen unter Bezugnahme auf die beiliegende Zeichnung näher erläutert.

In der Zeichnung zeigt:
Fig. 1 eine schematische Ansicht eines Antriebsmoduls gemäß einer ersten Ausführungsform;
Fig. 2 eine vergrößerte Ansicht eines Teils des Antriebsmoduls gemäß der ersten Ausführungsform;
Fig. 3 eine vergrößerte Ansicht eines Teils eines Antriebsmoduls gemäß einer zweiten Ausführungsform;
Fig. 4 eine vergrößerte Ansicht eines Teils eines Antriebsmoduls gemäß einer dritten Ausführungsform;
Fig. 5 eine Anordnung eines Antriebsstrangs eines Kraftfahrzeugs im Stand der Technik; und
Fig. 6 ein Hybridmodul im Stand der Technik.

### Beschreibung der Ausführungsformen

Es ist anzumerken, dass in der folgenden Beschreibung durchgängig durch die mehreren Figuren der verschiedenen Ausführungsformen gleiche Bezugszeichen verwendet werden, um gleiche oder ähnliche Elemente zu bezeichnen.

Nachstehend erfolgt die Beschreibung einer ersten Ausführungsform.

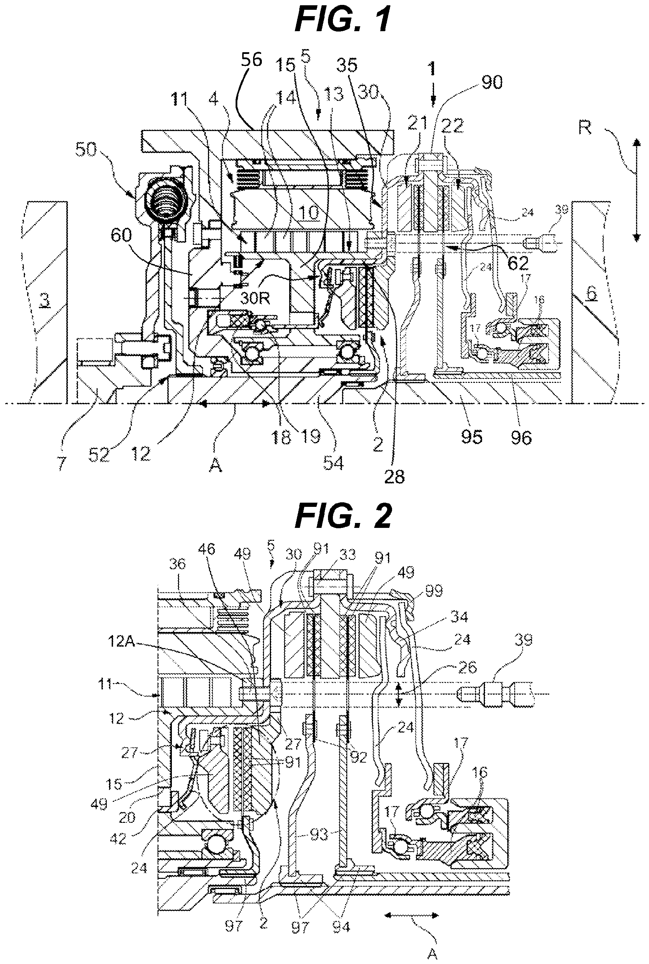

Fig. 1 zeigt eine schematische Ansicht eines Antriebsmoduls gemäß einer ersten Ausführungsform und Fig 2 zeigt eine vergrößerte Ansicht eines Teils des Antriebsmoduls gemäß der ersten Ausführungsform.

Genauer gesagt zeigt Figur 1 einen Teilschnitt durch das Antriebsmodul 5 für ein Kraftfahrzeug. Das Antriebsmodul 5 ist als ein Hybridmodul ausgeführt und ist zwischen einem ersten Antriebsmotor, beispielsweise einem Verbrennungsmotor 3, und einem Fahrzeugmodul, das ein von dem Antriebsmodul bereitgestelltes Dreh-moment aufnimmt, beispielsweise einem Getriebe 6, angeordnet. Um die nachfolgende Beschreibung zu vereinfachen, wird nachfolgend von einem Hybridmodul 5 gesprochen, dass zwischen dem Verbrennungsmotor 3 und dem Getriebe 6 angeordnet ist und mit diesen in Wirkverbindung stehen kann.

Eine Drehbewegung des Verbrennungsmotors 3 wird über eine Motorwelle 7 zu einem Zweimassenschwungrad bzw. ZMS 50 übertragen. Über eine Verzahnung 52 auf einer Zwischenwelle 54 wird eine Drehbewegung des Zweimassenschwungrads 50 zu dem Hybridmodul 5 übertragen. Das Hybridmodul 5 umfasst eine Trennkupplung 2 und eine Doppelkupplung 1. Die Trennkupplung 2 und die Doppelkupplung 1 sind als Trockenkupplungen ausgebildet. Das Hybridmodul 5 umfasst einen zweiten Antriebsmotor, der bei dem hier abgebildeten Hybridmodul 5 als eine elektrische Maschine 4 mit einem Stator 10 und einem Rotor 11 ausgeführt ist. Auf einem Außenumfang 13 eines Rotorträgers 12 sitzen mehrere magnetisierbare Elemente 14 des Rotors 11.

Für die Halterung der Trennkupplung 2 und der Doppelkupplung 1 an dem Rotorträger 12 ist eine Trägerplatte 30 vorgesehen. Die Trägerplatte 30 haltert die Trennkupplung 2 und bildet eine Befestigungsstelle für die Doppelkupplung 1 aus. Eine Zentralplatte 90 der Doppelkupplung 1 ist mit der Trägerplatte 30 verbunden und haltert eine erste Teilkupplung 21 und eine zweite Teilkupplung 22 der Doppelkupplung 1. Die Trennkupplung 2 ist in den Rotorträger 12 integriert. Die erste Teilkupplung 21 und die zweite Teilkupplung 22 sind in axialer Richtung A hintereinander angeordnet. Die erste Teilkupplung 21 und die zweite Teilkupplung 22 sind in axialer Richtung A hinter der elektrischen Maschine 4 angeordnet.

Die Zentralplatte 90 ist zwischen den beiden Teilkupplungen 21 und 22 angeordnet und dient den beiden Teilkupplungen 21 und 22 jeweils als eine Gegenplatte. Jede der beiden Teilkupplungen 21 und 22 weist eine Anpressplatte 49 auf, die drehfest aber axial beweglich mit der Zentralplatte 90 verbunden ist. Die Anpressplatten 49 sind mit einem Kupplungsbetätigungssystem wirkverbunden und können durch dieses kraftbeaufschlagt und axial verlagert werden. Zum Zwecke einer Drehmomentübertragung zwischen mindestens einem der Antriebsmotoren 3 und 4 und dem Getriebe 6 können die Anpressplatten 49 neben ihnen angeordnete Kupplungsscheiben gegen die Zentralplatte 90 pressen. Dadurch bilden sich Reibkontakte zwischen der jeweiligen Anpressplatte 49, der Kupplungsscheibe und der Zentralplatte 90 aus, die als Gegenplatte dient, durch die ein Drehmoment von den Antriebsmotoren 3 und 4 zu Getriebeeingangswellen 95 und 96 übertragbar ist.

Das Antriebsmodul 5 kann ein Drehmoment von dem ersten Antriebsmotor 3 und/oder dem zweiten Antriebsmotor 4 an ein Fahrzeugmodul, insbesondere ein Modul des Antriebsstrangs, beispielsweise ein Getriebe 6, weiterleiten oder Drehmoment von diesem Fahrzeugmodul zu dem ersten Antriebsmotor 3 und/oder dem zweiten Antriebsmotor 4 übertragen. Zusätzlich ist es möglich, Drehmoment zwischen den beiden Antriebsmotoren 3 und 4 zu übertragen (beispielsweise notwendig für ein Standladen eines Hybridsystems). Diese Drehmomentübertragungen können durch die in dem Antriebsmodul 5 verbauten Kupplungen 1, 2 realisiert, unterbrochen, dosiert und gesteuert werden.

Das Drehmoment des ersten Antriebsmotors, der in diesem Beispiel als Verbrennungsmotor 3 ausgeführt ist, kann folgendermaßen übertragen werden. Das Drehmoment wird von dem ersten Antriebmotor 3 zu einem Schwungrad übertragen, dass hier als das Zweimassenschwungrad 50 ausgeführt ist. Eine Abtriebsseite des Schwungrads ist mit einer Zwischenwelle 54 verbunden, die drehbar in einem achsenförmigen Fortsatz gelagert ist, der mit dem Antriebsmodulgehäuse (bzw. Hybridmodulgehäuse) 56 fest verbunden ist. Die andere Seite der Zwischenwelle 54 ist über eine Steckverzahnung mit einer Nabe einer Kupplungsscheibe verbunden. Diese Steckverzahnung ermöglicht sowohl die Drehmomentübertagung zwischen der Zwischenwelle 54 und der Kupplungsscheibe, als auch eine begrenzte axiale Verschiebbarkeit der Kupplungsscheibe. Diese Kupplungsscheibe ist Teil der Trennkupplung 2 und kann zwischen einer Anpressplatte 49 und einer Gegenplatte 46 zum Zwecke der Drehmomentübertragung verpresst werden. Die Gegenplatte 46 ist durch eine Trägerplatte 30 mit dem Rotorträger 12 der elektrischen Maschine 4 fest verbunden. Die Anpressplatte 49 ist drehfest aber axial beweglich mit der Trägerplatte 30 und dadurch auch dem Rotorträger 12 verbunden. Ist die Trennkupplung 2 geschlossen, so dass die Kupplungsscheibe reibschlüssig ein Drehmoment zu der Anpressplatte 49 und der Gegenplatte 46 überträgt, ist der Drehmomentenpfad zwischen dem ersten Antriebsmotor 3 und dem zweiten Antriebsmotor 4 geschlossen und ein Drehmoment kann beispielsweise von dem Verbrennungsmotor 3 zu der elektrischen Maschine 4 übertragen werden. Der Rotor 11 der elektrischen Maschine 4 ist mit zwei Wälzlagern auf demselben achsenförmigen Fortsatz gelagert, an dem auch die Zwischenwelle 54 gelagert ist. Dieser achsenförmige Fortsatz ist durch eine Stützwand 60 mit dem Antriebsmodulgehäuse bzw. Hybridmodulgehäuse 5 fest verbunden. Auf diesem achsenförmigen Fortsatz ist nicht nur der Rotor 11 der elektrischen Maschine 4 gelagert, sondern auch alle an dem Rotor 11 befestigten Kupplungskomponenten.

Das Drehmoment des zweiten Antriebsmotors (der elektrischen Maschine) 4 und oder das Drehmoment des ersten Antriebsmotors (des Verbrennungsmotors) 3, das über die Trennkupplung 2 übertragen wird, wird in die Trägerplatte 30 eingeleitet. Die Trägerplatte 30 überträgt das Drehmoment zu der mit der Trägerplatte 30 verbundenen Doppelkupplung 1. Das in die Doppelkupplung 1 eingeleitete Drehmoment kann über die erste und/oder die zweite Teilkupplung 21 bzw. 22 weitergeleitet werden. Ist die erste Teilkupplung 21 geschlossen, wird das Drehmoment über die eingeklemmten Reibbeläge 91 der Kupplungsscheibe zu den Belagfederungssegmenten 92 übertragen, die mit einer Mitnehmerscheibe 93 verbunden sind (z. B. vernietet). Die Mitnehmerscheibe 93 ist mit einer Nabe 94 verbunden (z. B. verstemmt, verschweißt, vernietet oder die Mitnehmerscheibe 93 und die Nabe 94 sind einteilig ausgeführt), die mit einer Steckverzahnung 97 drehfest, aber begrenzt axial verlagerbar mit einer inneren Getriebeeingangswelle 95 verbunden ist. Ist die erste Teilkupplung 21 geschlossen, kann somit Drehmoment von den Antriebsmotoren 3, 4 zu der inneren Getriebeeingangswelle übertragen werden. Wird die zweite Teilkupplung 22 geschlossen, wird das Drehmoment über die Kupplungsscheibe der zweiten Teilkupplung 22 übertragen. Die Kupplungsscheibe der zweiten Teilkupplung 22 ist vergleichbar aufgebaut wie die der ersten Teilkupplung 21, die gerade beschrieben worden ist. Die Kupplungsscheibe der zweiten Teilkupplung 22 ist jedoch über eine Steckverzahnung 97 mit einer äußeren Getriebeeingangswelle 96 verbunden. Ist die zweite Teilkupplung 22 geschlossen, kann somit Drehmoment von den Antriebsmotoren 3, 4 zu der äußeren Getriebeeingangswelle 96 übertragen werden. Da das Antriebsmodul 5 nicht nur zum Antreiben eines Getriebes 6, sondern auch zum Antreiben von einem anderen Fahrzeugmodul verwendbar ist, können die innere Getriebeeingangswelle 95 und äußere Getriebeeingangswelle 96 auch durch eine innere und/oder äußere Abtriebswelle ersetzt werden.

Den hier gezeigten Aufbau der Doppelkupplung 1, bei der rechts und links neben der Zentralplatte 90 jeweils eine Teilkupplung 21 oder 22 mit einer Kupplungsscheibe und einer Anpressplatte 49 angeordnet sind, bezeichnet man auch als Drei-Platten-Design. Durch diesen Doppelkupplungsaufbau und durch diese Art und Weise der Anordnung der Trennkupplung 2 und der Doppelkupplung 1 wird eine kompakte Bauweise erreicht, die robust und kostengünstig ist. Hinzu kommt, dass der gesamte Aufbau des Hybridmoduls 5 einfach gestaltet ist. Die Montage der Trennkupplung 2 und der Doppelkupplung 1 an dem Rotorträger 12 ist dadurch erheblich vereinfacht. Die Doppelkupplung 1 ist bei dieser Bauweise somit über die elektrische Maschine 4 gelagert. Diese Lagerung ergibt sich durch die Befestigung der Trägerplatte 30 an dem Rotorträger 12.

Alternativ kann die Doppelkupplung 1 auch noch über zusätzliche Abstützstellen gelagert werden, mit denen sich die Doppelkupplung 1 auf dem Fahrzeugmodul abstützt, das das von dem Antriebsmodul 5 bereitgestellte Drehmoment aufnimmt. Durch diese zusätzlichen Abstützstellen kann die Doppelkupplung 1 drehbar, aber radial abgestützt gelagert werden. Wälzlager sind hierfür gut geeignet. So ist beispielsweise eine Lagerstelle zwischen der Zentralplatte 90 und einer der Getriebeeingangswellen 95, 96 möglich. Auch ist es möglich, diese Lagerstelle zwischen der Doppelkupplung 1 und dem Getriebegehäuse oder dem Betätigungssystemgehäuse des Betätigungssystems vorzusehen, das die Doppelkupplung 1 betätigt. Auch wenn zusätzliche Abstützstellen vorhanden sind, erfolgt die Drehmomentübertragung zwischen der elektrische Maschine 4 und der Doppelkupplung 1 über die Trägerplatte 30.

Jede Kupplung 1, 2 wird von einem eigenen Betätigungssystem betätigt. Abgebildet sind drei hydraulische Betätigungssysteme, es können beispielsweise aber auch pneumatische, semihydraulische, semipneumatische, mechanische oder elektromechanische Einrücksysteme eingesetzt werden. Für die Funktion der Kupplungen 1, 2 ist es nicht relevant, mit welchem Wirkprinzip die Betätigungskraft bereitgestellt wird. Die erste Teilkupplung 21 und die zweite Teilkupplung 22 der Doppelkupplung 1 werden durch jeweils einen konzentrischen Nehmerzylinder 16 betätigt, die auf zugeordnete Einrücklager 17 wirken. Die von den Einrücklagern 17 übertragene Betätigungskraft wird jeweils auf ein Kraftübertragungs- oder Kraftverstärkungselement übertragen. In der Fig. 1 ist jeweils als Kraftverstärkungselement ein Hebelmechanismus 24 in Form einer Hebelfeder abgebildet.

Bei der zweiten Teilkupplung 22 stützt sich die Hebelfeder 24 mit ihrem radial äußeren Ende an einem Kupplungsdeckel 34 ab, der mit der Zentralplatte 90 verbunden ist. An einem radial mittleren Bereich der Hebelfeder 24 stützt sich die Anpressplatte 49, die durch Blattfedern in axialer Richtung zum Öffnen der Kupplung kraftbeaufschlagt ist (nicht abgebildet), mit ihrem Auflagenocken ab. Radial innen ist die Hebelfeder 24 über eine Verbindungsscheibe, die genutzt werden kann um axiale Toleranzen des Kupplungssystems auszugleichen, mit dem Betätigungssystem verbunden. Wird der radial innere Bereich der Hebelfeder 24 durch das Betätigungssystem axial verlagert, bewegt sich auch der mittlere Teil der Hebelfeder 24 und verlagert so die Anpressplatte 49 axial. Durch das Hebelverhältnis muss das Betätigungssystem zum Schließen der Kupplung weniger Kraft aufbringen, als als Anpresskraft von der Anpressplatte 49 auf die Kupplungsscheibe übertragen werden muss. Allerdings ist der Betätigungsweg, der an einem radial inneren Ende der Hebelfeder 24 erforderlich ist, größer als der Weg den die Anpressplatte 49 zurücklegt.

Die erste Teilkupplung 21 ist ebenfalls mit einem Hebelmechanismus 24 in Form einer Hebelfeder ausgestattet, die als Kraftverstärkungselement dient. Das Einrücklager 17, das mit der ersten Teilkupplung 21 wirkverbunden ist, überträgt seine Kraft über eine Einstellscheibe, die genutzt werden kann, um axiale Toleranzen des Kupplungssystems auszugleichen, auf den radial inneren Bereich der Hebelfeder 24. Der radial mittlere Bereich der Hebelfeder 24 liegt an dem Kupplungsdeckel 34 an, der mit der Zentralplatte 90 verbunden ist und für die Hebelfeder 24 eine axial feste Abstützstelle bildet. Das radial äußere Teil der Hebelfeder 24 ist durch ein Zugelement 99 mit der Anpressplatte 49 der ersten Teilkupplung 21 verbunden. Wird die Hebelfeder 24 der ersten Teilkupplung 21 radial innen axial in Richtung der ersten Teilkupplung 21 bewegt, so schwenkt der radial außerhalb der Deckelabstützstelle befindliche Teil der Hebelfeder 24 von der ersten Teilkupplung 21 weg. Da der radial äußere Teil der Hebelfeder 24 durch das Zugelement 99 mit der Anpressplatte 49 gekoppelt ist, wird dann die Anpressplatte 49 gegen die Kupplungsscheibe gezogen. Durch diesen Mechanismus kann die Kupplungsscheibe der ersten Teilkupplung 21 zum Zwecke der Drehmomentübertragung reibschlüssig eingeklemmt werden.

Die Trennkupplung 2 wird über einen konzentrischen Nehmerzylinder 18 betätigt, der auf ein Einrücklager 19 wirkt. Der Rotorträger 12 des Rotors 11 besitzt einen Rotorsteg 15, in dem mehrere Durchbrüche 20 ausgebildet sind. Ein Drucktopf 42 zur Betätigung der Trennkupplung 2 ist dabei derart ausgebildet, dass er durch die Durchbrüche 20 hindurchgreift und mit der Trennkupplung 2 über einen Hebelmechanismus 24 (Hebelfeder) in Wirkzusammenhang tritt. Auf die genaue Funktionsweise wird hier nicht mehr eingegangen, da der Hebelmechanismus 24 der Trennkupplung 1 auf analoge Weise wird die der der zweiten Teilkupplung 22 funktioniert.

Die Trägerplatte 30 kann einen scheibenförmigen Abschnitt 35 aufweisen, der radial außen einen Verbindungsbereich 33 für die Doppelkupplung 1 und radial innen einen Befestigungsbereich 27 für die Trennkupplung 2 aufweist. Der Befestigungsbereich 27 für die Trennkupplung 2 weist meist einen rohrförmigen oder zylindrischen Bereich 28 auf, der sich von dem scheibenförmigen Abschnitt 35 axial weg erstreckt und dabei radial außerhalb der Trennkupplung 2 (besonders radial außerhalb der Trennkupplungsscheibe) und radial innerhalb der magnetisierbaren Elemente 14 der elektrischen Maschine 4 verläuft. Der scheibenförmige Abschnitt 35 der Trägerplatte 30 ist verwendbar, um die Trägerplatte 30, die die Trennkupplung 2, die erste Teilkupplung 21 und die zweite Teilkupplung 22 direkt oder indirekt haltert, mit der elektrischen Maschine 4 zu verbinden. Dies kann durch Verschrauben oder Vernieten der Trägerplatte 30 mit dem Rotorträger 12 erfolgen (siehe z.B. Fig. 1). Die Verbindungsstelle zwischen der Trägerplatte 30 und dem Rotorträger 12 ist zusätzlich verwendbar, um Teile der Trennkupplung 2, der ersten Teilkupplung 21 oder der zweiten Teilkupplung 22 mit der Trägerplatte 30 zu verbinden. So können beispielsweise Schrauben oder andere Verbindungselemente durch die Gegenplatte 46 der Trennkupplung 1, durch die Trägerplatte 30 und durch den Rotorträger 12 hindurchführen und diese miteinander verbinden.

Eine mögliche Ausführungsform der Anordnung der Verbindungsstelle ist eine Schraubverbindung 36, die die Gegenplatte 46 der Trennkupplung 2, die Trägerplatte 30 und den Rotorträger 12 miteinander verbindet.

Die in Figur 2 gezeigte vergrößerte Ansicht eines Teils des Antriebsmoduls 5 stellt gemäß einer ersten Ausführungsform die Montage der Trennkupplung 2 und der Doppelkupplung 1 an dem Rotorträger 12 dar. Durch diese Montage wird erreicht, dass die Trennkupplung 2 und die Doppelkupplung 1 über die Drehung des Rotors 11 gedreht werden. Die Trägerplatte 30 ist aus einem Stück geformt. Bevorzugt ist die Trägerplatte 30 aus einem Blechteil hergestellt, das kalt umgeformt bzw. tiefgezogen ist. Die Trägerplatte 30 haltert die Trennkupplung 2 und die Doppelkupplung 1. Dazu sind beispielsweise die Gegenplatte 46 und die Anpressplatte 49 der Trennkupplung 2 und die Zentralplatte 90 der Doppelkupplung 1 drehfest mit der Trägerplatte 30 verbunden. Die Gegenplatte 46 und die Zentralplatte 90 werden zusätzlich auch noch axial durch die Trägerplatte 30 abgestützt.

Gemäß der in Fig. 1 gezeigten Ausführungsform, ist die Trägerplatte 30 über eine Verbindungsstelle an dem Rotorträger 12 befestigt. Diese Verbindungstelle kann aus einer Schraubverbindung 36 an dem Rotorträger 12 oder einer auf anderen Befestigungselementen beruhenden Verbindung, wie beispielsweise Nieten, bestehen. Durch diese Verbindungstelle zwischen dem Rotorträger 12 und der Trägerplatte 30 werden die beiden Unterkomponenten, elektrische Maschine 4 und Kupplungssystem, bestehend aus Doppelkupplung 1 und Trennkupplung 2, miteinander verbunden. Es ist besonders wirtschaftlich und montagefreundlich, wenn diese beiden Unterkomponenten zuerst unabhängig voneinander aufgebaut und geprüft und erst anschließend verbunden werden.

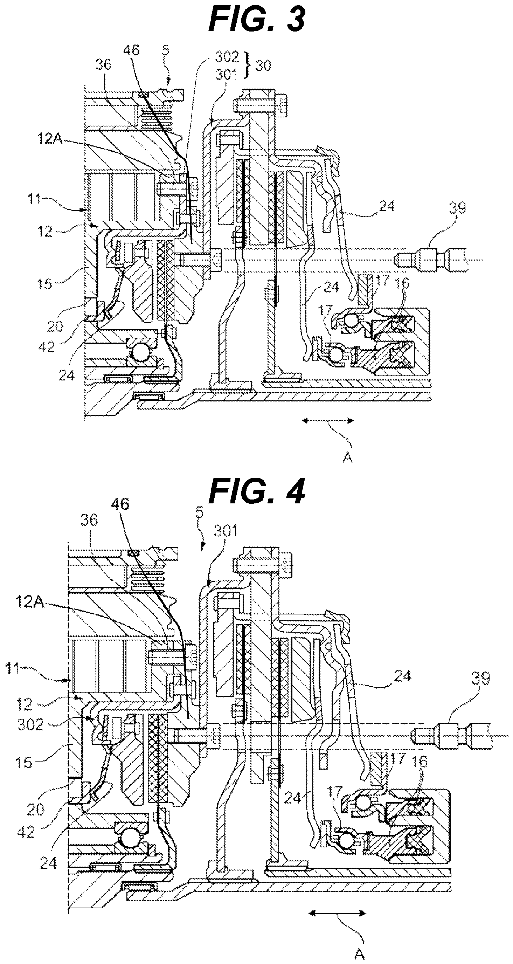

Wie diese beiden vormontierten Unterkomponenten verbunden werden können, zeigt Fig. 2. Durch Durchgriffsöffnungen 62 in der Doppelkupplung 1 radial innerhalb der Reibflächen kann während der Montage auf die Befestigungselemente eingewirkt werden, die die Trägerplatte 30 mit dem Rotorträger 12 verbinden. Dadurch wird der folgende Montageablauf möglich: Die drei mit der Trägerplatte 30 verbundenen Kupplungen (Trennkupplung 2, erste Teilkupplung 21 der Doppelkupplung 1 und zweite Teilkupplung 22 der Doppelkupplung 1) werden an die elektrische Maschine 4 angesetzt, indem der rohrförmige oder zylindrische Bereich 28 der Trägerplatte 30, in dem sich die Trennkupplung 2 befindet, in den Rotorträger 12 hineingesteckt wird und der scheibenförmige Abschnitt 35 der Trägerplatte 30 an der Befestigungsplatte 12A angelegt wird. Anschließend werden die Befestigungselemente durch die Durchgriffsöffnungen 62 hindurch positioniert und befestigt. Wenn die Befestigungselemente noch nicht vorhanden sind, können sie dabei durch die Doppelkupplung 1 hindurch eingebracht werden. Wenn die Befestigungselemente bereits vorpositioniert sind, müssen Sie nur durch die Durchgriffsöffnungen 62 hindurch in ihre finale Lage gebracht werden. Bei der in Fig. 2 gezeigten Schraubverbindung 36 können die Schrauben mit einem Betätigungselement 39, z.B. einem Werkzeug, durch die Durchgriffsöffnungen 62 durch die Doppelkupplung 1 hindurch gesteckt werden und anschließend verschraubt werden. Bei Fig. 2 gehen die Durchgriffsöffnungen 62 durch die erste Teilkupplung 21 und die zweite Teilkupplung 22 hindurch. Um eine durchgehende Öffnung 62 zu bilden, sind entlang einer gedachten Linie Öffnungen in folgenden Teilen vorhanden: Hebelmechanismus (Hebelfeder) 24 der ersten Teilkupplung 21, Hebelmechanismus (Hebelfeder) 24 der zweiten Teilkupplung 22, Kupplungsscheibe der zweiten Teilkupplung 22 und Kupplungsscheibe der ersten Teilkupplung 21. In den Kupplungsscheiben können die Öffnungen, wie in Fig. 2 gezeigt, in oder zwischen den Belagsfederungssegmenten 92 vorhanden sein oder alternativ in der Mitnehmerscheibe 93 vorgesehen werden (Fig.3). Es ist auch möglich, Öffnungen in der Zentralplatte 90 oder dem Kupplungsdeckel 34 vorzusehen (Fig. 4).

Bei den Figuren 3 und Fig.4 sind die Durchgriffsöffnungen 62 radial außerhalb des Betätigungssystems für die Doppelkupplung 1 angeordnet. Wenn zu dem Montagezeitpunkt, an dem die Durchgriffsöffnungen 62 benötigt werden, das Betätigungssystem noch nicht mit der Doppelkupplung 1 verbunden worden ist, so können die Durchgriffsöffnungen 62 und die Befestigungselemente radial noch weiter nach innen verlegt werden in den Bereich, der später von dem Betätigungssystem axial abgedeckt wird.

Figur 3 beschreibt eine weitere Ausführungsform des Antriebsmoduls 5. Bei dieser Ausführungsform bilden die Trennkupplung 2 und die Doppelkupplung 1 separate Unterkomponenten, die nacheinander an der elektrischen Maschine 4 befestigt werden. Die Trennkupplung 2 besitzt eine eigene Trägerplatte 302, die die Gegenplatte 46 und die Anpressplatte 49 der Trennkupplung 2 aufnimmt und abstützt und über die die Trennkupplung 2 auch mit dem Rotor 10 der elektrischen Maschine 4 verbunden wird. Diese Trägerplatte 302 weist auch einen rohrförmigen oder zylindrischen Bereich 28 auf, der sich von der Gegenplatte 46 weg erstreckt und dabei radial außerhalb der Trennkupplung 2 (besonders radial außerhalb der Trennkupplungsscheibe) und radial innerhalb der magnetisierbaren Elemente 14 der elektrischen Maschine 4 verläuft. Der scheibenförmige Abschnitt 35 der Trägerplatte 302, der sich in einem Bereich der Gegenplatte 46 radial nach außen erstreckt, ist verwendbar, um die Trägerplatte 302 und die Trennkupplung 2 mit der elektrischen Maschine 4 zu verbinden. Diese Verbindung kann als Verschraubung erfolgen, wie in Fig. 3 gezeigt. Alternativ können aber auch andere Verbindungselemente genutzt werden, wie beispielsweise Niete, insbesondere Blindniete.

Die Doppelkupplung 1 ist bei dieser Ausführungsform mit einer weiteren Trägerplatte 301 an der Trennkupplung 2 befestigt. Diese Trägerplatte 301, die die Doppelkupplung 1 abstützt, kann, wie in Fig. 3 gezeigt, an der Gegenplatte 46 der Trennkupplung 2 befestigt sein. Alternativ kann die Trägerplatte 301 der Doppelkupplung 1 auch an anderen Bauteilen der Trennkupplung 2 befestigt sein, beispielsweise der Trägerplatte 302 der Trennkupplung 2. Dass die Doppelkupplung 1 über ihre Trägerplatte 301 nicht mehr direkt mit dem Rotor 11 der elektrischen Maschine 4 verbunden ist, sondern mit der Trennkupplung 2, hat den Vorteil, dass die Verbindungstelle zur Trennkupplung 2 radial weiter nach innen gezogen werden kann als die Verbindungsstelle direkt an dem Rotor 11. Dadurch ist es einfacher, die für die Montage notwendigen Durchgriffsöffnungen 62 innerhalb der Reibbeläge anzuordnen. Eine oder beide Teilkupplungen können bei den in Figuren 3 und Fig. 4 gezeigten Ausführungsformen Reibflächen aufweisen, deren Innendurchmesser kleiner oder gleich groß ist wie der Innendurchmesser der Befestigungsplatte 12A des Rotorträgers 12, ohne dass die Reibflächen partiell ausgespart werden müssen. Auch ist es möglich, dass eine oder beide Teilkupplungen 21 und 22 Reibflächen aufweisen, deren Innendurchmesser kleiner oder gleich groß ist wie der Innendurchmesser des rohrförmigen oder zylindrischen Bereichs der Trägerplatte 302 der Trennkupplung 2, der sich radial innerhalb der magnetisierbaren Elemente 14 der elektrischen Maschine 4 erstreckt, ohne dass die Reibflächen partiell ausgespart werden müssen.

Wenn bei der in Figur 1 beschriebenen Ausführungsform der radial am weitesten innenliegende Bereich der Reibflächen ähnlich weit nach innen gezogen werden soll, wie es bei den Ausführungsformen von Fig. 3 und Fig. 4 möglich ist, müssen in einer alternativen Ausführungsform die Reibflächen partiell ausgespart werden, um die Durchgriffsöffnungen 62 so ausrichten zu können, dass die Befestigungselemente, mit denen die Trägerplatte 302, die die Doppelkupplung 1 abstützt, an dem Rotor 11 der elektrischen Maschine 4 verbunden wird, erreichbar sind. Diese partiellen Aussparungen der Reibflächen erfordern dann beispielsweise, dass in den Anpressplatten 49, in der Zentralplatte 90 und in den Reibbelägen der Kupplungsscheiben Aussparungen oder Durchgangslöcher vorgesehen werden müssen.

Bei der in Fig. 4 gezeigten Ausführungsform, ist die Gegenplatte 46 der Trennkupplung 2 direkt mit dem Rotorträger 12 verbunden. Die Doppelkupplung 1 ist über ihre Trägerplatte 301 an der Gegenplatte 46 der Trennkupplung befestigt 2. Dies hat gegenüber der Ausführungsform von Fig. 3, bei der die Gegenplatte 46 der Trennkupplung 2 nur indirekt über die Trägerplatte 302 der Trennkupplung 2 mit dem Rotorträger 12 verbunden ist, den Vorteil, dass zwischen der elektrischen Maschine 4 und der Doppelkupplung 1 weniger Teile im Kraftfluss angeordnet sind. Dadurch ist die Toleranzkette zwischen der elektrischen Maschine 4 und der Doppelkupplung 1 kürzer und es kann eine exaktere Positionierung der Komponenten garantiert werden.

Für die Ausführungsformen von Fig. 3 und Fig. 4 sind die folgenden Montageabläufe möglich.

Durch diese beiden Verbindungstellen zwischen dem Rotorträger 12 und der Trennkupplung 2 und zischen der Trennkupplung 2 und der Doppelkupplung 1 werden die drei Unterkomponenten, elektrische Maschine 4, Trennkupplung 2 und Doppelkupplung 1 miteinander verbunden. Es ist besonders wirtschaftlich und montagefreundlich, wenn diese drei Unterkomponenten zuerst unabhängig voneinander aufgebaut und geprüft werden und erst anschließend verbunden werden.

Wie diese beiden vormontierten Unterkomponenten verbunden werden, zeigen Fig. 3 und 4. Die Trennkupplung 2 wird an die elektrische Maschine 4 angesetzt, indem der rohrförmige oder zylindrische Bereich 28 der Trägerplatte 302 der Trennkupplung 2, in dem sich die Trennkupplung 2 befindet, in den Rotorträgers 12 hineingesteckt wird und der scheibenförmige Abschnitt 35 dieser Trägerplatte 302 an der Befestigungsplatte 12A angelegt wird und mit diesem verbunden wird. Für diese Verbindung sind Befestigungselemente wie beispielsweise Schrauben gut geeignet (Fig. 3). Bei der Ausführungsform von Fig. 4 sind diese Arbeitsschritte ganz ähnlich, nur wird hier nicht die Trägerplatte 302, sondern die Gegenplatte 46 der Trennkupplung 2 an der Befestigungsplatte 12A des Rotorträgers 12 angelegt und mit diesem verbunden (z.B. verschraubt). In einem weiteren Montageschritt wird die Doppelkupplung 1 mit ihrer Trägerplatte 301 an der Gegenplatte 46 der Trennkupplung 2 angelegt und ausgerichtet. Anschließend werden die Befestigungselemente, mit der die Trägerplatte 301 der Doppelkupplung 1 mit der Gegenplatte 46 der Trennkupplung 2 verbunden werden, durch die Durchgriffsöffnungen 62 hindurch positioniert und befestigt. Wenn die Befestigungselemente noch nicht vorhanden sind, können sie dabei durch die Doppelkupplung 1 hindurch eingebracht werden. Wenn die Befestigungselemente bereits vorpositioniert sind, müssen Sie nur durch die Durchgriffsöffnungen 62 hindurch in ihre finale Lage gebracht werden. Bei der in Figuren 3 und Fig. 4 gezeigten Schraubverbindung 36 können die Schrauben mit einem Betätigungselement 39, z.B. einem Werkzeug, durch die Durchgriffsöffnungen 62 durch die Doppelkupplung 1 hindurch gesteckt werden und anschließend verschraubt werden.

Alternativ kann bei den Ausführungsformen von Figuren 3 und Fig. 4 auch auf die Durchgriffsöffnungen 62 in der Doppelkupplung 1 verzichtet werden. Dazu wird, nachdem die Trennkupplung 2 mit der elektrischen Maschine 4 verbunden worden ist, zuerst nur die Trägerplatte 301 der Doppelkupplung 1 mit der Trennkupplung 2 verbunden. Dies kann beispielsweise durch eine Verschraubung zwischen der Gegenplatte 46 der Trennkupplung 2 und der Trägerplatte 301 der Doppelkupplung 1 erfolgen. Da die Doppelkupplung 1 noch nicht mit ihrer Trägerplatte 301 verbunden ist, ist die Verbindungstelle noch gut zugänglich. Anschließend wird die Trägerplatte 301 der Doppelkupplung 1 mit der Doppelkupplung 1 verbunden. Dies kann beispielsweise durch eine Verbindungsstelle radial außen an der Doppelkupplung 1 erfolgen. Die Trägerplatte 301 der Doppelkupplung 1 kann dabei mit der Zentralplatte 90 verbunden werden, beispielsweise durch Verschrauben oder Vernieten.

In einer weiteren alternativen Ausführungsform ist die Trägerplatte 301 der Doppelkupplung 1 bereits mit der Trennkupplung 2 verbunden, bevor die Trennkupplung 2 mit der elektrischen Maschine 4 verbunden wird. In diesem Fall sollte die Trägerplatte 301 der Doppelkupplung 1 Durchgangsöffnungen 62 aufweisen, die vor den Befestigungsstellen angeordnet sind, mit denen die Trennkupplung 2 mit der elektrischen Maschine 4 verbunden wird. Dadurch können die Befestigungselemente mit denen die Trägerplatte 301 der Doppelkupplung 1 mit der Gegenplatte 46 der Trennkupplung 2 verbunden wird, durch die Durchgriffsöffnungen 62 hindurch positioniert und befestigt werden, nachdem die Trennkupplung 2 an die elektrische Maschine 4 angesetzt worden ist. Wenn die Befestigungselemente noch nicht vorhanden sind, können sie dabei durch die Trägerplatte 301 der Doppelkupplung 1 hindurch eingebracht werden. Wenn die Befestigungselemente bereits vorpositioniert sind, müssen sie nur durch die Durchgriffsöffnungen 62 hindurch in ihre finale Lage gebracht werden. Bei einer Schraubverbindung können die Schrauben mit einem Werkzeug durch die Durchgriffsöffnungen 62 der Trägerplatte 302 der Doppelkupplung 1 hindurch gesteckt werden und anschließend verschraubt werden.

Die Begriffe axial und radial und Umfangsrichtung beziehen sich immer auf eine Rotationsachse des Antriebsmoduls. Die Axialrichtung ist somit orthogonal zu den Reibflächen der Kupplungen 1, 2 ausgerichtet.

Anstatt einer Doppelkupplung kann eine Einfachkupplung verwendet werden. Es entfällt damit eine der beiden Teilkupplungen.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Ansprüche verwiesen.

### Liste der Bezugszeichen

- 1: Doppelkupplung
- 2: Trennkupplung
- 3: erster Antriebsmotor (z.B. Verbrennungsmotor)
- 4: zweiter Antriebsmotor (z.B. elektrische Maschine)
- 5: Antriebsmodul
- 6: Fahrzeugmodul (z.B. Getriebe)
- 7: Motorwelle
- 10: Stator
- 11: Rotor
- 12: Rotorträger
- 12A: Befestigungsplatte
- 13: Außenumfang
- 14: magnetisierbare Elemente
- 15: Rotorsteg
- 16: konzentrischer Nehmerzylinder
- 17: Einrücklager
- 18: konzentrischer Nehmerzylinder
- 19: Einrücklager
- 20: Durchbruch
- 21: erste Teilkupplung
- 22: zweite Teilkupplung
- 24: Hebelmechanismus
- 27: Befestigungsbereich
- 28: rohrförmiger oder zylindrischer Bereich
- 30: Trägerplatte
- 30R: radial nach innen verlaufender Bereich
- 33: Verbindungsbereich
- 34: Kupplungsdeckel
- 35: scheibenförmiger Abschnitt
- 36: Schraubverbindung
- 39: Betätigungselement
- 42: Drucktopf
- 46: Gegenplatte
- 49: Anpressplatte
- 50: Zweimassenschwungrad
- 52: Verzahnung
- 54: Zwischenwelle
- 56: Gehäuse
- 60: Stützwand
- 62: Öffnungen
- 90: Zentralplatte
- 91: Reibbelag
- 92: Belagfederungssegmente
- 93: Mitnehmerscheibe
- 94: Nabe
- 95: innere Getriebeeingangswelle
- 96: äußere Getriebeeingangswelle
- 97: Steckverzahnung
- 99: Zugelement
- 301: Trägerplatte der Doppelkupplung
- 302: Trägerplatte der Trennkupplung
- A: Achse
- R: radiale Richtung

## Patentansprüche

1. Antriebsmodul (5) für einen Antriebsstrang eines Kraftfahrzeugs, wobei das Antriebsmodul (5) aufweist:
eine elektrische Maschine (4), die einen Rotorträger (12) mit einem um eine Achse (A) drehbeweglichen Rotor (11) aufweist;
eine Trennkupplung (2), die in dem Rotor (11) der elektrischen Maschine (4) an dem Rotorträger (12) gehaltert ist; und
eine der elektrischen Maschine (4) nachgeordnete und einem Getriebe (6) vorgeordnete Doppelkupplung (1), die eine erste Teilkupplung (21) und eine zweite Teilkupplung (22) aufweist, **dadurch gekennzeichnet, dass**
mindestens eine der ersten Teilkupplung (21) und der zweiten Teilkupplung (22) eine Durchgriffsöffnung (62) aufweist, durch die derart auf ein Befestigungselement (36) einwirkbar ist, dass die Doppelkupplung (1) oder mindestens Teile der Doppelkupplung (1) mit der elektrischen Maschine (4) verbindbar oder von dieser trennbar sind.

2. Antriebsmodul (5) nach Anspruch 1, wobei die erste Teilkupplung (21) und die zweite Teilkupplung (22) eine gemeinsame Zentralplatte (90) aufweisen.

3. Antriebsmodul (5) nach Anspruch 2, wobei die gemeinsame Zentralplatte (90) eine Gegenplatte der ersten Teilkupplung (21) und eine Gegenplatte der zweiten Teilkupplung (22) ausbildet.

4. Antriebsmodul (5) nach einem der Ansprüche 1 bis 3, wobei die Durchgriffsöffnung (62) radial innerhalb von Reibbelägen (91) mindestens einer der ersten Teilkupplung (2) und der zweiten Teilkupplung (22) angeordnet ist.

5. Antriebsmodul (5) nach einem der Ansprüche 1 bis 4, wobei
die Doppelkupplung (1) mit einer Trägerplatte (30) verbunden ist, und
die Trägerplatte (3) mittels des Befestigungselements (36) an dem Rotorträger (12) befestigt ist.

6. Antriebsmodul (5) nach einem der Ansprüche 1 bis 5, wobei eine Gegenplatte (46) der Trennkupplung (2) mittels des Befestigungselements (36) an dem Rotorträger (12) befestigt ist.

7. Antriebsmodul (5) nach einem der Ansprüche 1 bis 4, wobei
die Doppelkupplung (1) mit einer ersten Trägerplatte (301) verbunden ist,
der Rotorträger (12) mit einer zweiten Trägerplatte (302) verbunden ist, und
die Doppelkupplung (1) über die erste Trägerplatte (301) und die zweite Trägerplatte (302) mittels des Befestigungselements (36) an dem Rotorträger (12) befestigt ist.

8. Antriebsmodul (5) nach Anspruch 7, wobei
die erste Trägerplatte (301) mittels des Befestigungselements (36) an einer Gegenplatte (46) der Trennkupplung (2) befestigt ist, und
die zweite Trägerplatte (302) an der Gegenplatte (46) der Trennkupplung (2) und dem Rotorträger (12) befestigt ist.

9. Antriebsmodul (5) nach Anspruch 7, wobei
die erste Trägerplatte (301) mittels des Befestigungselements (36) an einer Gegenplatte (46) der Trennkupplung (2) befestigt ist,
die zweite Trägerplatte (302) an der Gegenplatte (46) der Trennkupplung (2) befestigt ist, und
die Gegenplatte (46) der Trennkupplung (2) an dem Rotorträger (12) befestigt ist.

10. Antriebsmodul (5) nach einem der Ansprüche 1 bis 9, wobei die Trennkupplung (2), die erste Teilkupplung (21) und die zweite Teilkupplung (22) als trockene Kupplungen ausgebildet sind.

## Claims

1. A drive module (5) for a powertrain of a motor vehicle, the drive module (5) having:
an electric machine (4) having a rotor carrier (12) with a rotor (11) rotatable about an axis (A);
a decoupler (2) which is held in the rotor (11) of the electric machine (4) on the rotor carrier (12); and
a twin clutch (1) arranged downstream of the electric machine (4) and upstream of a transmission (6), which has a first sub-clutch (21) and a second sub-clutch (22), **characterised in that**
at least one of the first sub-clutch (21) and second sub-clutch (22) has a reach-through opening (62) through which a fastening element (36) can be acted on in such a way that the twin clutch (1) or at least parts of the twin clutch (1) can be connected to the electric machine (4) or decoupled from it.

2. A drive module (5) according to Claim 1, wherein the first sub-clutch (21) and the second sub-clutch (22) have a common central plate (90).

3. A drive module (5) according to Claim 2, wherein the common central plate (90) forms a counter plate of the first sub-clutch (21) and a counter plate of the second sub-clutch (22).

4. A drive module (5) according to any one of Claims 1 to 3, wherein the reach-through opening (62) is arranged radially inside friction linings (91) of at least one of the first sub-clutch (2) and the second sub-clutch (22).

5. A drive module (5) according to any one of Claims 1 to 4, wherein
the twin clutch (1) is connected to a carrier plate (30), and
the carrier plate (3) is fastened to the rotor carrier (12) by means of the fastening element (36).

6. A drive module (5) according to any one of Claims 1 to 5, wherein a counter plate (46) of the decoupler (2) is fastened to the rotor carrier (12) by means of the fastening element (36).

7. A drive module (5) according to any one of Claims 1 to 4, wherein
the twin clutch (1) is connected to a first carrier plate (301),
the rotor carrier (12) is connected to a second carrier plate (302), and
the twin clutch (1) is fastened to the rotor carrier (12) via the first carrier plate (301) and the second carrier plate (302) by means of the fastening element (36).

8. A drive module (5) according to Claim 7, wherein
the first carrier plate (301) is fastened to a counter plate (46) of the decoupler (2) by means of the fastening element (36), and
the second carrier plate (302) is fastened to the counter plate (46) of the decoupler (2) and the rotor carrier (12).

9. A drive module (5) according to Claim 7, wherein
the first carrier plate (301) is fastened to a counter plate (46) of the decoupler (2) by means of the fastening element (36),
the second carrier plate (302) is fastened to the counter plate (46) of the decoupler (2), and
the counter plate (46) of the decoupler (2) is fastened to the rotor carrier (12).

10. A drive module (5) according to any one of Claims 1 to 9, wherein the decoupler (2), the first sub-clutch (21) and the second sub-clutch (22) are designed as dry clutches.

## Revendications

1. Module d'entraînement (5) pour une chaîne cinématique d'un véhicule automobile, le module d'entraînement (5) présentant :
une machine électrique (4) présentant un support de rotor (12) avec un rotor (11) mobile en rotation autour d'un axe (A) ;
un embrayage de séparation (2) qui est maintenu dans le rotor (11) de la machine électrique (4) sur le support de rotor (12) ; et
un double embrayage (1) disposé en aval de la machine électrique (4) et en amont d'une boîte de vitesse (6) et présentant un premier embrayage partiel (21) et un second embrayage partiel (22), **caractérisé en ce que**
au moins un parmi le premier embrayage partiel (21) et le second embrayage partiel (22) présente une ouverture de passage (62), à travers laquelle un élément de fixation (36) peut agir de telle sorte que le double embrayage (1) ou au moins des parties du double embrayage (1) puissent être reliées à la machine électrique (4) ou séparées de celle-ci.

2. Module d'entraînement (5) selon la revendication 1, dans lequel le premier embrayage partiel (21) et le second embrayage partiel (22) présentent un plateau central commun (90).

3. Module d'entraînement (5) selon la revendication 2, dans lequel le plateau central commun (90) forme un contre-plateau du premier embrayage partiel (21) et un contre-plateau du second embrayage partiel (22).

4. Module d'entraînement (5) selon l'une quelconque des revendications 1 à 3, dans lequel l'ouverture de passage (62) est agencée radialement à l'intérieur de garnitures de friction (91) d'au moins l'un parmi le premier embrayage partiel (2) et le second embrayage partiel (22).

5. Module d'entraînement (5) selon l'une quelconque des revendications 1 à 4, dans lequel
le double embrayage (1) est relié à un plateau de support (30) et
le plateau de support (3) est fixé au support de rotor (12) au moyen de l'élément de fixation (36).

6. Module d'entraînement (5) selon l'une quelconque des revendications 1 à 5, dans lequel un contre-plateau (46) de l'embrayage de séparation (2) est fixé au support de rotor (12) au moyen de l'élément de fixation (36).

7. Module d'entraînement (5) selon l'une quelconque des revendications 1 à 4, dans lequel
le double embrayage (1) est relié à un premier plateau de support (301),
le support de rotor (12) est relié à un second plateau de support (302) et
le double embrayage (1) est fixé au support de rotor (12) par l'intermédiaire du premier plateau de support (301) et du second plateau de support (302) au moyen de l'élément de fixation (36).

8. Module d'entraînement (5) selon la revendication 7, dans lequel
le premier plateau de support (301) est fixé à un contre-plateau (46) de l'embrayage de séparation (2) au moyen de l'élément de fixation (36) et
le second plateau de support (302) est fixé au contre-plateau (46) de l'embrayage de séparation (2) et au support de rotor (12).

9. Module d'entraînement (5) selon la revendication 7, dans lequel
le premier plateau de support (301) est fixé à un contre-plateau (46) de l'embrayage de séparation (2) au moyen de l'élément de fixation (36),
le second plateau de support (302) est fixé au contre-plateau (46) de l'embrayage de séparation (2) et
le contre-plateau (46) de l'embrayage de séparation (2) est fixé au support du rotor (12).

10. Module d'entraînement (5) selon l'une quelconque des revendications 1 à 9, dans lequel l'embrayage de séparation (2), le premier embrayage partiel (21) et le second embrayage partiel (22) sont formés comme des embrayages à sec.
